# EUROPÄISCHE PATENTSCHRIFT

(11) **EP 4 541 567 B1**
(45) Veröffentlichungstag und Bekanntmachung des Hinweises auf die Patenterteilung: **17.12.2025**
(21) Anmeldenummer: 23204114.5
(22) Anmeldetag: 17.10.2023
(51) Int. Cl.: B29D 11/00, B29C 33/56

(54) **VORRICHTUNG ZUM GIESSEN VON OPTISCHEN ELEMENTEN AUS KUNSTSTOFF SOWIE VERFAHREN ZUR HERSTELLUNG DER VORRICHTUNG**
APPARATUS FOR MOLDING PLASTIC OPTICAL ELEMENTS AND METHOD OF MAKING THE APPARATUS
DISPOSITIF POUR MOULER DES ÉLÉMENTS OPTIQUES EN MATIÈRE PLASTIQUE ET PROCÉDÉ POUR FABRIQUER LE DISPOSITIF

(43) Veröffentlichungstag der Anmeldung: 23.04.2025
(73) Patentinhaber: Roland Mandler GmbH & Co. KG, 35452 Heuchelheim (DE)
(72) Erfinder: Mandler, Roland, 35452 Heuchelheim (DE)
(74) Vertreter: Knefel, Cordula

(56) Entgegenhaltungen:
- DE-B4- 102005 014 617
- US-A1- 2004 244 421

## Beschreibung

Die Erfindung betrifft eine Vorrichtung zum Gießen von optischen Elementen aus Kunststoff sowie ein Verfahren zur Herstellung der Vorrichtung.

Bei der Herstellung von Rezeptgläsern in der Brillenglasfertigung wird, wie aus der Praxis bekannt, folgender Ablauf durchgeführt.

Zuerst werden halbfertige Rohlinge, sogenannte "blanks", hergestellt. Diese Fertigung erfolgt über ein flüssiges Monomer, das in Gießformen eingefüllt wird. Diese Gießformen, gefüllt mit dem Monomer, werden anschließend über einen Zeitraum von circa 24 Stunden in einem "Curing-Bad" oder in Öfen ausgehärtet. Das Bad besteht in der Regel aus Wasser, welches auf eine Temperatur von circa 80 °C gebracht wird. Nach dem Aushärten werden die Rohlinge ausgeformt. Üblicherweise ist die Konvexseite des Rohlings die erste bereits fertige Funktionsfläche des Brillenglases. Die zweite Seite, die sogenannte "Rezeptfläche", wird dann anschließend über einen spanabhebenden Prozess mechanisch zu dem finalen Brillenglasrezept angefertigt. Erst nach diesem Arbeitsgang entsteht die finale Wirkung des Brillenglases. Dieser Prozess besteht aus einer Kombination der über die Gießtechnik gefertigten Konvexseite und der mechanisch gefertigten Konkavseite des Brillenglases.

Um die Anzahl der Rohteile zu beschränken, sind diese Rohteile deutlich dicker hergestellt als das fertige Brillenglas. Dadurch kann eine Vielzahl von Rezeptgläsern aus einem Rohteil gefertigt werden. Da jedoch nicht alle Rezeptgläser aus einem Rohteil zu fertigen sind, werden typischerweise acht bis zehn unterschiedliche Rohlinge pro Glasindex hergestellt. Die Vorderseite (cx-Seite - Konvexseite) ist dabei gestuft von sehr flach, das heißt zum Beispiel 0,5 Dioptrien, bis sehr gekrümmt, das heißt bis zum Beispiel 12 Dioptrien ausgebildet. In der Praxis sind typischerweise circa acht bis zwölf verschiedene Frontkurven üblich.

Die Gießformen werden in der Fachsprache als sogenannte "Molds" bezeichnet. Diese sind, wie aus der Praxis bekannt, aus Glas. Die Technik stammt aus der Mineralglasfertigung von Brillengläsern. Die Firmen, die die "Molds" herstellen, haben auf vorhandene Maschinentechniken zurückgegriffen. Dieses waren weltweit Maschinentechniken für die Mineralglasfertigung. Aus diesem Grunde sind in der Praxis alle Gießformen, die zum Herstellen von Halbfertigteilen, aber auch für Fertiggläser aus Plastik eingesetzt werden, aus optischem Glas. Aus der Praxis ist bekannt, hierfür ein Glas mit der Bezeichnung BK7 einzusetzen. Es können jedoch auch andere Glastypen eingesetzt werden.

Aus der Praxis ist auch bekannt, die Formen aus Stahl herzustellen, nämlich für Polycarbonat-Gläser. Dieser Kunststoff wird nicht über ein Monomer hergestellt, sondern aus einem Granulat über einen Spritzgussprozess. Der Anteil der Polycarbonat-Gläser ist weltweit sehr gering, nämlich maximal 10%. Das bedeutet, dass der Anteil an Gießformen aus Mineralglas dominiert.

Aus der Praxis ist bekannt, die Gießformen aus Mineralglas derart herzustellen, dass durch einen thermischen Abformprozess Rohlinge für die Gießformen hergestellt werden. Typische Abmessungen sind 90 mm Durchmesser bei einer Mittendicke von 10 bis 12 mm. Eine Meniskusform mit einem Frontradius (cx-Seite) von 300 mm bis 60 mm abgestuft in vier bis fünf Kurven sowie eine konkave Seite im Radiusbereich von 300 mm bis 60 mm abgestuft in vier bis fünf Kurven ist ebenfalls aus der Praxis bekannt.

Die Konvex- und Konkavradien werden in der Praxis unterschiedlich miteinander kombiniert, so dass typischerweise fünf bis sechs unterschiedliche Rohteile entstehen. Diese Rohteile werden anschließend über Maschinen aus dem Bereich der Mineralglasfertigung mechanisch weiterbearbeitet. Hierfür werden die Oberflächen und auch der Rand der Rohteile zu einem hochgenauen Gießformwerkzeug veredelt. Im Anschluss an das mechanische Bearbeiten wie Schleifen mit Diamantwerkzeugen und Polieren mit Kunststofffolie werden die Molds noch über einen Härteprozess chemisch gehärtet, um die Lebensdauer zu vergrößern. Zusätzlich werden auch noch Mikrogravuren aufgebracht, um Markierungen auf das Brillenglas zu übertragen.

Die Molds können sowohl sphärische, asphärische als auch Freiform-Oberflächen auf der Funktionsseite (Konkavseite des Frontmolds) aufweisen, je nach dem, welche Arten von Brillengläsern hergestellt werden sollen. Die typische Lebensdauer eines Glasmolds beträgt im Schnitt circa 200 Abgusszyklen. Danach muss die Funktionsfläche nachbearbeitet werden. Dies bedeutet, dass die Herstellung beziehungsweise Nachbearbeitung von Gießformen (Molds) einen enormen Arbeitsaufwand verursacht.

Diese aus der Praxis bekannten Gießformen aus, Glas weisen den Nachteil auf, dass in der Brillenglasindustrie Millionen von Glasmolds jährlich bearbeitet werden müssen. Der Gießprozess von Kunststoffgläsern läuft in der Praxis wie folgt ab: Es werden zwei Gießformen so miteinander gepaart, dass die gewünschte Kombination und Dicke für das herzustellende Brillenglas entsteht. Diese beiden Molds werden mittels eines Dichtbandes oder auch einer speziellen Dichtung miteinander verbunden.

Nach der Montage wird, wie aus der Praxis bekannt, über eine Einfülldüse, die beispielsweise nadelförmig ausgebildet ist, das Monomer zwischen die beiden Molds eingefüllt. Danach wird der Curing-Prozess durchgeführt, beispielsweise in einem temperierten Wasserbad oder in einem Temperaturofen. Bei dem Curing-Prozess erfolgt die Aushärtung eines Monomer- oder Polymermaterials durch Vernetzung der Polymerketten. Als Curing-Prozess wird allgemein der Vorgang bezeichnet, bei dem aus einem flüssigen Material ein festes Produkt gewonnen wird. Wenn das Curing abgeschlossen ist, werden die Molds von Hand geöffnet und das Brillenglas wird ausgeformt. Die Dichtungen werden entsorgt und die Glasmolds gereinigt und für den nächsten Abformprozess bereitgestellt.

US 2004/244421 A1 offenbart eine Vorrichtung zum Gießen von optischen Elementen und ein entsprechendes Verfahren.

Das der Erfindung zugrundeliegende technische Problem besteht darin, eine Vorrichtung zum Gießen von optischen Elementen, insbesondere Brillenglasrohlingen, aus Kunststoff anzugeben, mit, der deutlich mehr Abgusszyklen als bei den aus der Praxis bekannten Vorrichtungen durchgeführt werden können. Darüber hinaus soll ein Verfahren zur Herstellung dieser Vorrichtung angegeben werden, mit der deutlich mehr Abgusszyklen durchführbar sind.

Dieses technische Problem wird durch eine Vorrichtung mit den Merkmalen gemäß Anspruch 1 sowie durch ein Verfahren mit den Merkmalen gemäß Anspruch 7 gelöst.

Die erfindungsgemäße Vorrichtung zum Gießen von optischen Elementen aus Kunststoff, bei der die Vorrichtung zwei Gießformteile aufweist, zeichnet sich dadurch aus, dass jedesGießformteil aus einem Grundkörper aus reaktionsgebundenem siliciuminfiltriertem Siliciumcarbid (SiSiC) besteht und dass auf dem Grundkörper wenigstens eine Schicht aus einem keramischen Material angeordnet ist.

Dadurch, dass das Gießformteil aus einem Grundkörper aus reaktionsgebundenem siliciuminfiltriertem Siliciumcarbid (SiSiC) besteht, und dadurch, dass auf dem Grundkörper wenigstens eine,Schicht aus einem keramischen Material angeordnet ist, können mehr als 10.000 bis 100.000 Abgüsse mit der Form durchgeführt werden, ohne dass die Form, das heißt die Funktionsfläche, nachbearbeitet werden muss. Hierdurch werden die Kosten für die Gießformen und für das Material deutlich reduziert. Durch die lange Lebensdauer der Gießformen sind deutlich weniger Gießformen erforderlich, wodurch das Grundmaterial Glas, aus denen die Formen, wie aus der Praxis bekannt, bestehen, nicht mehr erforderlich ist. Darüber hinaus ist der gesamte Prozess wesentlich nachhaltiger in der Gesamtenergiebetrachtung.

Die optischen Elemente, die aus Kunststoff in der erfindungsgemäßen Vorrichtung hergestellt werden, sind vorzugsweise Brillenglasrohlinge aus Kunststoff. Es ist jedoch auch möglich, andere optische Elemente aus Kunststoff in der Vorrichtung herzustellen.

Der Grundkörper besteht gemäß der Erfindung aus reaktionsgebundenem siliciuminfiltriertem Siliciumcarbid (SiSiC). Dieser Werkstoff weist den Vorteil auf, dass praktisch keine Schwindung auftritt. Darüber hinaus ist auf dem Grundkörper wenigstens eine Schicht aus einem keramischen Material angeordnet. Das keramische Material weist den Vorteil auf, dass es eine sehr große Härte aufweist, wodurch die Lebensdauer der erfindungsgemäßen Vorrichtung deutlich erhöht wird.

Gemäß einer vorteilhaften Ausführungsform der Erfindung ist vorgesehen, dass wenigstens eine auf dem Grundkörper angeordnete Schicht aus einem Material besteht, welches eine Härte größer als 1.100 nach Knoop oder Vickers aufweist. Eine Härte größer als 1.100 nach Knoop oder Vickers ist ausreichend, um die Lebensdauer der Gießformteile gegenüber den aus der Praxis bekannten Gießformteilen aus Glas deutlich zu erhöhen.

Gemäß einer besonders bevorzugten Ausführung der Erfindung besteht die wenigstens eine auf dem Grundkörper angeordnete Schicht aus Siliciumcarbid (SiC) oder Aluminiumoxid (Al₂O₃) oder Bornitrid (BN) oder Zirkonoxid (ZrO₂) oder Siliciumnitrid (Si₃N₄).

Siliciumcarbid ist der leichteste und auch der härteste keramische Werkstoff. Die Härte von Siliciumcarbid beträgt circa 2.600 nach Vickers und Knoop. Die Härte von Siliciumcarbid kann 9,6 nach Mohs-Skala erreichen.

Siliciumcarbid zählt zu den technischen Keramiken.

Dadurch, dass es der härteste keramische Werkstoff ist, ist Siliciumcarbid besonders geeignet, um es als wenigstens eine Schicht auf dem Grundkörper der erfindungsgemäßen Vorrichtung anzuordnen. Hierdurch kann die maximale Anzahl von Abgusszyklen erreicht werden.

Die wenigstens eine auf dem Grundkörper angeordnete Schicht kann auch aus Aluminiumoxid (Al₂O₃) mit einer Vickers-Härte von 1.500 bis 2.100 HV oder Bornitrid (BN) mit einer Vickers-Härte von 1.800 bis 3.000 HV oder Zirkonoxid (ZrO₂) mit einer Vickers-Härte von 1.100 bis 1.600 HV oder Siliciumnitrid (Si₃N₄) mit einer Vickers-Härte von 1.400 bis 1.700 HV gebildet sein.

Gemäß einer weiteren vorteilhaften Ausführungsform der Erfindung ist vorgesehen, dass die wenigstens eine auf dem Grundkörper angeordnete Schicht als aufgedampfte Schicht ausgebildet ist. Siliciumcarbid lässt sich auf den Grundkörper aufdampfen. Hierdurch entsteht eine gleichmäßige Beschichtung des Grundkörpers.

Gemäß einer weiteren vorteilhaften Ausführungsform der Erfindung ist vorgesehen, dass der Grundkörper aus einem zu einem reaktionsgebundenen siliciuminfiltrierten Siliciumcarbid-Körper umgewandelten ISO-Graphit gebildet ist. Der Grundkörper aus ISO-Graphit wird über einen thermischen Prozess zu einem SiSiC-Körper umgewandelt. Das heißt, in den Grundkörper aus ISO-Graphit wird bei einer Temperatur von mehr als 2.300 °C Silicium eingelagert oder infiltriert.

Das Einlagern des Siliciums in den ISO-Graphit-Körper wird vorteilhaft in einem Brennvorgang durchgeführt.

ISO-Graphit ist die Abkürzung für isostatisches Graphit. Isostatisches Graphit ist eine Graphitsorte mit ultrafeiner Körnung:
Gemäß einer weiteren vorteilhaften Ausführung der Erfindung ist vorgesehen, dass ein erstes Gießformteil eine konkav ausgebildete Innenform aufweist und dass ein zweites Gießformteil eine konvex ausgebildete Innenform aufweist und dass die konkav ausgebildete Innenform des ersten Gießformteiles eine Abstufung im Millimeter-Bereich aufweist.

Gemäß der Erfindung ist vorgesehen, dass für das Frontmold (konkave Fläche des Molds) eine Abstufung im Millimeter-Bereich vorgesehen ist und nicht mehr eine Abstufung nach Dioptrien, wie es aus der Praxis bekannt ist.

Als Radius werden vorteilhaft folgende Formen für die sphärischen Frontmolds festgelegt:
R - 750 (≙ 0,8 dpt bei Index 1,600)
R - 500 (≙ 1,2 dpt bei Index 1,600)
R - 250 (≙ 2,4 dpt bei Index 1,600)
R - 125 (≙ 4,8 dpt bei Index 1,600)
R - 100 (≙ 6,0 dpt bei Index 1,600)
R - 75 (≙ 8,0 dpt bei Index 1,600)
R - 63,5 (≙ 9,44 dpt bei Index 1,600)
R - 50 (≙ 12,0 dpt bei Index 1,600)

Bei dem Index handelt es sich um den Brechungsindex des Monomers, aus dem die optischen Elemente, insbesondere die Brillengläser gefertigt werden.

Die angegebenen Radien werden vorteilhaft für sämtliche Materialindizes verwendet. Dadurch reduzieren sich die Frontmolds auf lediglich noch zehn Sorten gegenüber von mehr als 100 unterschiedlichen Sorten, wie es gemäß der Praxis vorgesehen ist. Im Prinzip ist bei dem erfindungsgemäßen Mold-Konzeptaufbau eine Normierung der Konvexfläche (cx-Fläche) von Brillengläsern eine besonders vorteilhafte Eigenschaft.

Durch die erfindungsgemäße Vorrichtung, gemäß der die konkav ausgebildete Innenform des ersten Gießformteiles eine Abstufung im Millimeter-Bereich aufweist, ist es möglich, die Anzahl der notwendigen Mold-Sorten für die Frontseite (cx-Fläche - Konvexfläche) der Brillengläser deutlich zu reduzieren. Da fast jede Firma weltweit ihr eigenes Mold-Konzept entwickelt hat, ist es möglich, dass für das gleiche fertige Brillenglas zehn bis zwanzig unterschiedliche Frontkurven auf dem Markt sind. Hinzu kommen noch unterschiedliche Materialindizes, wodurch sich die Anzahl noch einmal um das Drei- bis Vierfache erhöhen kann. Teilweise ist der Unterschied zwischen dem Brillenglas eines ersten Herstellers A und eines zweiten Herstellers B lediglich um 0,05 bis 0,1 Dioptrien unterschiedlich. Aus diesem Grunde gibt es eine Vielfalt an Gießformen bei weltweiter Betrachtung.

Mit der erfindungsgemäßen Vorrichtung ist es möglich, mit wenigen cx-Flächen fast alle beliebigen Brillengläser zu fertigen. Das geschieht durch die sogenannte Freiformfertigung auf der Innenseite des jeweiligen Brillenglases.

Durch die Ausführungsform der erfindungsgemäßen Vorrichtung ist es möglich, eine normierte oder standardisierte cx-Fläche bei dem zu fertigenden Brillenglas vorzusehen. Das bedeutet, dass die cv-förmige Moldform (konkave Moldform) nur noch mit relativ geringer Abstufung vorgesehen ist.

Das erfindungsgemäße Verfahren zur Herstellung einer erfindungsgemäßen Vorrichtung zeichnet sich dadurch aus, dass für eine Gießform in einem Grundkörper aus ISO-Graphit bei einem Brennvorgang bei einer Temperatur von mehr als 2.300 °C Silicium eingelagert und in einen reaktionsgebundenen siliciuminfiltrierten Siliciumcarbid-Körper (SiSiC) umgewandelt wird, dass nach dem Brennvorgang der Grundkörper mechanisch auf eine Rohform geformt wird, dass der Grundkörper mit wenigstens einer Keramik bedampft wird, dass anschließend innerhalb der aufgedampften Keramikschicht eine finale Oberflächenform durch wenigstens einen Schleifvorgang und durch wenigstens einen sich an den wenigstens einen Schleifvorgang anschließenden Poliervorgang ausgebildet wird.

Der Grundkörper der Gießformteile besteht aus einem isostatischen Graphit, das heißt aus ISO-Graphit. Dieser Grundkörper wird über einen thermischen Prozess zu einem SiSiC-Körper umgewandelt. Das heißt, in den Grundkörper aus ISO-Graphit wird bei einer Temperatur von mehr als 2.300 °C Silicium eingelagert.

Nach dem Brennen des Grundkörpers und dem Einlagern oder Infiltrieren von Silicium im ISO-Graphit wird in einem mechanischen Prozess der Grundkörper auf seine Rohform bearbeitet. Nach diesem Arbeitsgang wird der Rohkörper in einem weiteren Reaktionsprozess mit einer reinen SiC-Schicht, das heißt Siliciumcarbid-Schicht, bedampft. Der Grundkörper kann auch mit einer reinen Schicht aus Aluminiumoxid (Al₂O₃) oder Bornitrid (BN) oder Zirkonoxid (ZrO₂) oder Siliciumnitrid (Si₃N₄) bedampft werden.

Die Bedampfung wird vorteilhaft in einem CVD-(Chemical Vapour Depositing) Verfahren durchgeführt.

Durch das erfindungsgemäße Verfahren ist bevorzugt eine Herstellung eines qualitativ hochwertigen Gießformteiles möglich, bei dem der Kern aus einem zu einem SiSiC-Körper umgewandelten ISO-Graphit besteht und bei dem eine Keramikschicht aus Siliciumcarbid (SiC) oder Aluminiumoxid (Al₂O₃) oder Bornitrid (BN) oder Zirkonoxid (ZrO₂) oder Siliciumnitrid (Si₃N₄) aufgedampft wird.

Gemäß einer weiteren vorteilhaften Ausführungsform des erfindungsgemäßen Verfahrens ist vorgesehen, dass die wenigstens eine Keramikschicht mit einer Schichtdicke zwischen 0,4 mm und 1,0 mm aufgedampft wird. Vorteilhaft ist die Dicke der Keramikschicht 0,5 mm bis 0,8 mm dick.

Diese Dicke ist ausreichend, um einerseits die notwendige Härte des Gießformteiles zu gewährleisten. Zum anderen ist diese Dicke groß genug, um die finale Oberflächenform innerhalb dieser Schichtdicke herzustellen. Das bedeutet, dass auch nach dem Ausbilden der finalen Oberflächenform an jeder Stelle des Gießformteiles eine Keramikschicht vorhanden ist.

Gemäß einer besonders bevorzugten Ausführungsform der Erfindung ist vorgesehen, dass die aufgedampfte Keramikschicht als eine ausschließlich aus Siliciumcarbid bestehende Schicht ausgebildet wird.

Der Grundkörper wird nach der Bearbeitung auf seine Rohform mit einer reinen Siliciumcarbid-Schicht (SiC) bedampft.

Siliciumcarbid ist der härteste keramische Werkstoff. Die Härte kann 9,6 nach Mohs-Skala und 2.600 nach Vickers und Knoop betragen.

Durch diese harte Schicht in dem Gießformteil kann die Anzahl der Abgusszyklen für ein Gießformteil deutlich mehr als 10.000 bis 100.000 Abgusszyklen betragen.

Gemäß einer weiteren vorteilhaften Ausführungsform des erfindungsgemäßen Verfahrens wird das erste Gießformteil mit einer konkaven Innenform ausgebildet und das zweite Gießformteil wird mit einer konvexen Innenform ausgebildet und die konkave Innenform des ersten Gießformteiles wird mit einer Abstufung im Millimeter-Bereich ausgebildet.

Diese Ausführungsform weist den Vorteil auf, dass für das Frontmold (cv-Fläche) die Abstufung im Millimeter-Bereich erfolgt und nicht mehr, wie aus der Praxis bekannt, nach Dioptrien. Durch eine normierte oder standardisierte cx-Fläche bei dem zu fertigenden Brillenglas ist die Abstufung für die cv-förmige Moldform im Millimeter-Bereich ausreichend. Hierdurch wird die Anzahl der Frontmolds auf vorteilhaft zehn Sorten beschränkt.

Bei dem Gießprozess werden zwei Gießformen der erfindungsgemäßen Vorrichtung so gepaart, dass die gewünschte Kombination und Dicke für das herzustellende Brillenglas entsteht.

Weitere Merkmale und Vorteile der Erfindung ergeben sich anhand der zugehörigen Zeichnungen, in denen ein Ausführungsbeispiel der Erfindung dargestellt ist, ohne die Erfindung auf dieses Ausführungsbeispiel zu beschränken. In den Zeichnungen zeigen:
- Fig. 1: zwei Gießformteile zur Herstellung eines Brillenglases im Längsschnitt;
- Fig. 2: ein Gießformteil im Längsschnitt;
- Fig. 3: ein Gießformteil in Draufsicht.

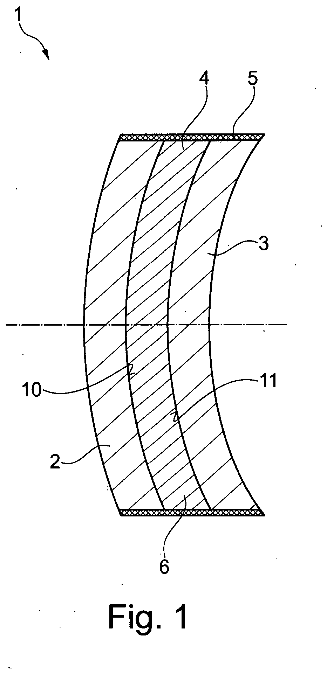

Fig. 1 zeigt eine Vorrichtung 1 mit zwei Gießformteilen 2, 3. Das Gießformteil 2 ist das vordere Gießformteil (Frontmold). Das Gießformteil 3 ist das hintere Gießformteil (Backmold). Ein Gießraum 4 zwischen dem vorderen Gießformteil 2 und dem hinteren Gießformteil 3 wird durch ein Dichtband 5 begrenzt. Zwischen dem vorderen Gießformteil 2, dem hinteren Gießformteil 3 und dem Dichtband 5 wird ein Kunststoff angeordnet, um ein Brillenglas 6 aus Kunststoff auszubilden.

Die zwei Gießformteile 2, 3 werden zu der Vorrichtung 1 gepaart. Nach der Paarung und Montage wird über eine nadelförmige Einfülldüse (nicht dargestellt) ein Monomer zwischen die beiden Gießformteile 2, 3 eingefüllt. Danach wird ein Curing-Prozess durchgeführt. In einem temperierten Wasserbad oder einem Temperaturofen wird die Vorrichtung 1 angeordnet, damit das Monomer aushärten kann. Anschließend werden die Gießformteile 2, 3 geöffnet und das Brillenglas 6 ausgeformt. Die Dichtung 5 wird weggeworfen und die Gießformteile 2, 3 stehen für den nächsten Abformprozess nach einer Reinigung bereit.

Das Gießformteil 2 weist eine konkave Innenfläche 10 auf und das Gießformteil 3 weist eine konvexe Innenfläche 11 auf.

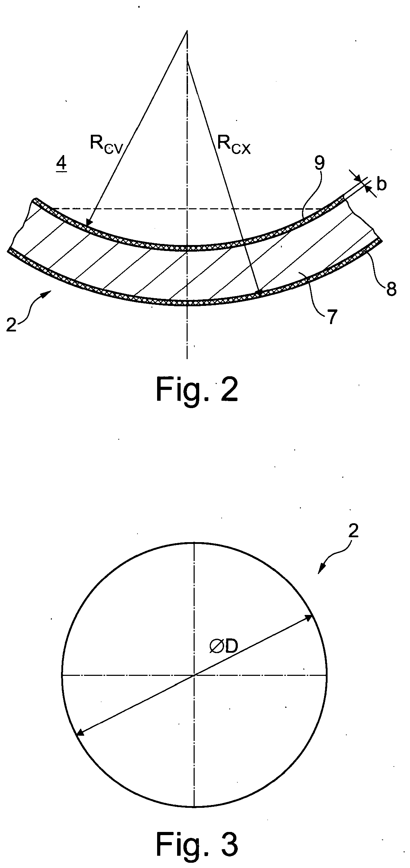

Fig. 2 zeigt das Gießformteil 2. Das Gießformteil 2 besteht aus einem Grundkörper 7 und zwei Schichten 8, 9 aus Siliciumcarbid (SiC). Der Grundkörper 7 besteht aus reaktionsgebundenem siliciuminfiltriertem Siliciumcarbid (SiSiC). Die Siliciumschichten 8, 9 weisen eine Dicke b auf. Die Dicke der Siliciumschichten 8, 9 beträgt zwischen 0,4 mm und 1,0 mm. Die Siliciumschichten 8, 9 werden aufgedampft.

Grundsätzlich ist es ausreichend, auf der den Gießraum 4 bildenden Fläche des Gießformteiles 2 eine Siliciumcarbidschicht 9 aufzubringen. Da die Siliciumcarbidschicht jedoch aufgedampft wird, ist auch auf der dem Gießraum 4 abgewandten Seite des Gießformteiles 2 eine Siliciumcarbidschicht 8 angeordnet.

Das Gießformteil 2 weist einen Radius R_{cv} für die Konkavfläche des Gießformteiles 2 auf sowie einen Radius R_{cx} für die Konvexseite des Gießformteiles 2 auf.

Die Ausbildung der Schichten 8, 9 aus Siliciumcarbid ist besonders vorteilhaft, da Siliciumcarbid sehr leicht ist und das härteste bekannte Keramikmaterial ist.

In Fig. 3 ist das Gießformteil 2 dargestellt. Das Gießformteil 2 weist einen Durchmesser D auf.

### Bezugszahlen

- 1: Vorrichtung
- 2: vorderes Gießformteil (Frontmold)
- 3: hinteres Gießformteil (Backmold)
- 4: Gießraum
- 5: Dichtband
- 6: Brillenglas
- 7: Grundkörper
- 8: Schicht
- 9: Schicht
- 10: Innenfläche konkav
- 11: Innenfläche konvex
- b: Schichtdicke
- R_{cv}: Radius
- R_{cx}: Radius
- D: Durchmesser

## Patentansprüche

1. Vorrichtung (1) zum Gießen von optischen Elementen (6) aus Kunststoff, bei der die Vorrichtung (1) zwei Gießformteile aufweist, wobei jedes Gießformteil (2, 3) aus einem Grundkörper (7) aus reaktionsgebundenem siliciuminfiltriertem Siliciumcarbid besteht und dass aufdem Grundkörper (7) wenigstens eine Schicht (8, 9) aus einem keramischen Material angeordnet ist.

2. Vorrichtung nach Anspruch 1, **dadurch gekennzeichnet, dass** die wenigstens eine auf dem Grundkörper (7) angeordnete Schicht (8, 9) aus einem Material besteht, welches eine Härte größer 1.100 nach Knoop oder Vickers aufweist.

3. Vorrichtung nach Anspruch 1 oder 2, **dadurch gekennzeichnet, dass** die wenigstens eine auf dem Grundkörper (7) angeordnete Schicht (8, 9) aus Siliciumcarbid oder Aluminiumoxid oder Bornitrid oder Zirkonoxid oder Siliciumnitrid besteht.

4. Vorrichtung nach einem der vorhergehenden Ansprüche, **dadurch gekennzeichnet, dass** die wenigstens eine auf dem Grundkörper (7) angeordnete Schicht (8, 9) als aufgedampfte Schicht (8, 9) ausgebildet ist.

5. Vorrichtung nach einem der vorhergehenden Ansprüche, **dadurch gekennzeichnet, dass** der Grundkörper (7) aus einem zu einem reaktionsgebundenen siliciuminfiltrierten Siliciumcarbid-Körper umgewandelten ISO-Graphit gebildet ist.

6. Vorrichtung nach einem der vorhergehenden Ansprüche, **dadurch gekennzeichnet, dass** ein erstes Gießformteil (2) eine konkav ausgebildete Innenfläche (10) aufweist, und dass ein zweites Gießformteil (3) eine konvex ausgebildete Innenfläche (11) aufweist, und dass die konkav ausgebildete Innenfläche (10) des ersten Gießformteiles (2) eine Abstufung im Millimeter-Bereich aufweist.

7. Verfahren zur Herstellung einer Vorrichtung nach Anspruch 1, wobei für ein Gießformteil (2, 3) in einen Grundkörper (7) aus ISO-Graphit bei einem Brennvorgang mit einer Temperatur von mehr als 2.300 °C Silicium eingelagert und in einen reaktionsgebundenen siliciuminfiltrierten Siliciumcarbid-Körper umgewandelt wird, dass nach dem Brennvorgang der Grundkörper (7) mechanisch auf eine Rohform geformt wird, dass der Grundkörper (7) mit wenigstens einer Keramik bedampft wird, dass anschließend innerhalb der aufgedampften Keramikschicht (8, 9) eine finale Oberflächenform durch wenigstens einen Schleifvorgang und durch wenigstens einen sich an den wenigstens einen Schleifvorgang anschließenden Poliervorgang ausgebildet wird.

8. Verfahren nach Anspruch 7, **dadurch gekennzeichnet, dass** die wenigstens eine Keramikschicht (8, 9) mit einer Schichtdicke (b) zwischen 0,4 mm und 1,0 mm aufgedampft wird.

9. Verfahren nach einem der Ansprüche 7 oder 8,
**dadurch gekennzeichnet, dass** die aufgedampfte Keramikschicht (8, 9) als eine ausschließlich aus Siliciumcarbid bestehende Schicht (8, 9) ausgebildet wird.

10. Verfahren nach einem der Ansprüche 7 bis 9,
**dadurch gekennzeichnet, dass** ein erstes Gießformteil (2) mit einer konkav ausgebildeten Innenfläche (10) ausgebildet wird, und dass ein zweitesGießformteil (3) mit einer konvex ausgebildeten Innenfläche (11) ausgebildet wird, und dass die konkav ausgebildete Innenfläche (10) des ersten Gießformteiles (2) mit einer Abstufung im Millimeter-Bereich ausgebildet wird.

## Claims

1. Apparatus (1) for casting optical elements (6) from plastic where the apparatus (1) comprises two casting mould parts, wherein each casting mould part (2, 3) is composed of a main body (7) made of reaction-bonded silicon-infiltrated silicon carbide and that at least one layer (8, 9) of a ceramic material is arranged on the main body (7).

2. Apparatus according to Claim 1, **characterized in that** the at least one layer (8, 9) arranged on the main body (7) is made of a material having a hardness greater than 1100 according to Knoop or Vickers.

3. Apparatus according to Claim 1 or 2, **characterized in that** the at least one layer (8, 9) arranged on the main body (7) consists of silicon carbide or aluminium oxide or boron nitride or zirconium oxide or silicon nitride.

4. Apparatus according to any of the preceding claims, **characterized in that** the at least one layer (8, 9) arranged on the main body (7) is in the form of a layer (8, 9) applied by vapour deposition coating.

5. Apparatus according to any of the preceding claims, **characterized in that** the main body (7) is formed from an ISO graphite converted into a reaction-bonded silicon-infiltrated silicon carbide body.

6. Apparatus according to any of the preceding claims, **characterized in that** a first casting mould part (2) has a concave inner surface (10) and that a second casting mould part (3) has a convex inner surface (11) and that the concave inner surface (10) of the first casting mould part (2) has a gradation in the millimetre range.

7. Process for producing an apparatus according to Claim 1, wherein for a casting mould part (2, 3) silicon is incorporated into a main body (7) made of ISO graphite at a temperature of more than 2300°C in a calcining operation to effect conversion into a reaction-bonded silicon-infiltrated silicon carbide body, that after the calcining operation the main body (7) is mechanically shaped into a rough shape, that the main body (7) is vapour deposition coated with at least one ceramic, that subsequently a final surface shape is implemented within the ceramic layer (8, 9) applied by vapour deposition coating via at least one grinding operation and via at least one polishing operation which follows the at least one grinding operation.

8. Process according to Claim 7, **characterized in that** the at least one ceramic layer (8, 9) is applied by vapour deposition coating in a layer thickness (b) between 0.4 mm and 1.0 mm.

9. Process according to Claim 7 or 8, **characterized in that** the ceramic layer (8, 9) applied by vapour deposition coating is implemented as a layer (8, 9) consisting exclusively of silicon carbide.

10. Process according to any of Claims 7 to 9, **characterized in that** a first casting mould part (2) is implemented with a concave inner surface (10) and that a second casting mould part (3) is implemented with a concave inner surface (11) and that the concave inner surface (10) of the first casting mould part (2) is implemented with a gradation in the millimetre range.

## Revendications

1. Dispositif (1) pour mouler des éléments optiques (6) en matière plastique, le dispositif (1) comprenant deux parties de moule,
chaque partie de moule (2, 3) étant constituée d'un corps de base (7) en carbure de silicium infiltré par du silicium lié par réaction et au moins une couche (8, 9) constituée d'un matériau céramique étant agencée sur le corps de base (7).

2. Dispositif selon la revendication 1, **caractérisé en ce que** ladite au moins une couche (8, 9) agencée sur le corps de base (7) est constituée d'un matériau qui présente une dureté Knoop ou Vickers supérieure à 1100.

3. Dispositif selon la revendication 1 ou 2, **caractérisé en ce que** ladite au moins une couche (8, 9) agencée sur le corps de base (7) est constituée de carbure de silicium ou d'oxyde d'aluminium ou de nitrure de bore ou d'oxyde de zirconium ou de nitrure de silicium.

4. Dispositif selon l'une quelconque des revendications précédentes, **caractérisé en ce que** ladite au moins une couche (8, 9) agencée sur le corps de base (7) est réalisée sous forme de couche déposée en phase vapeur (8, 9).

5. Dispositif selon l'une quelconque des revendications précédentes, **caractérisé en ce que** le corps de base (7) est formé à partir d'un graphite ISO converti en un corps en carbure de silicium infiltré par du silicium lié par réaction.

6. Dispositif selon l'une quelconque des revendications précédentes, **caractérisé en ce qu'**une première partie de moule (2) présente une surface intérieure (10) de forme concave, et **en ce qu'**une seconde partie de moule (3) présente une surface intérieure (11) de forme convexe, et **en ce que** la surface intérieure (10) de forme concave de la première partie de moule (2) présente un échelonnement dans la plage du millimètre.

7. Procédé de fabrication d'un dispositif selon la revendication 1, dans lequel, pour une partie de moule (2, 3), du silicium est incorporé dans un corps de base (7) en graphite ISO lors d'une opération de cuisson à une température supérieure à 2300 °C et est converti en un corps en carbure de silicium infiltré par du silicium lié par réaction, en ce qu'après l'opération de cuisson, le corps de base (7) est transformé mécaniquement en une ébauche, en ce que le corps de base (7) est revêtu par dépôt en phase vapeur d'au moins un matériau céramique, et en ce qu'à l'intérieur de la couche céramique déposée en phase vapeur (8, 9), une forme de surface finale est ensuite formée par au moins une opération de rectification et par au moins une opération de polissage faisant suite à ladite au moins une opération de rectification.

8. Procédé selon la revendication 7, **caractérisé en ce que** ladite au moins une couche céramique (8, 9) est déposée en phase vapeur sur une épaisseur de couche (b) comprise entre 0,4 mm et 1,0 mm.

9. Procédé selon l'une quelconque des revendications 7 ou 8, **caractérisé en ce que** la couche céramique déposée en phase vapeur (8, 9) est réalisée sous forme de couche (8, 9) constituée exclusivement de carbure de silicium.

10. Procédé selon l'une quelconque des revendications 7 à 9, **caractérisé en ce qu'**une première partie de moule (2) est réalisée avec une surface intérieure (10) de forme concave, et **en ce qu'**une seconde partie de moule (3) est réalisée avec une surface intérieure (11) de forme convexe, et **en ce que** la surface intérieure (10) de forme concave de la première partie de moule (2) est réalisée avec un échelonnement dans la plage du millimètre.
